(19) Europäisches Patentamt
European Patent Office
Office européen des brevets

(11) Publication number: **0 089 913**
**A1**

# (12) EUROPEAN PATENT APPLICATION

(21) Application number: 83630046.7

(22) Date of filing: 15.03.83

(51) Int. Cl.³: C 08 G 63/46
C 09 D 3/68

(30) Priority: 15.03.82 US 358170

(43) Date of publication of application: 28.09.83 Bulletin 83/39

(84) Designated Contracting States: DE FR GB NL

(71) Applicant: THE GOODYEAR TIRE & RUBBER COMPANY
1144 East Market Street
Akron, Ohio 44316(US)

(72) Inventor: Saracsan, Jeffrey William
125 Thorlone Avenue
Akron Ohio 44312(US)

(74) Representative: Weyland, Joseph Jean Pierre
Goodyear International Tire Technical Center Patent
Department Avenue Gordon Smith
L-7750 Colmar-Berg(LU)

## (54) Unsaturated polyester and process for making an unsaturated polyester.

(57) An unsaturated polyester comprising:

(A) from 95 to 80 parts by weight of a carboxyl terminated copolyester having an acid number of from 20 to 85;

(B) from 4 to 15 parts by weight of an epoxyacrylate compound of the formula

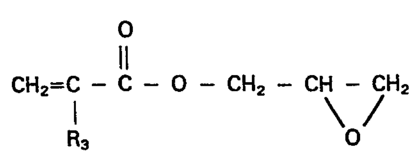

where $R_3$ is selected from the group consisting of a hydrogen radical or an alkyl radical having 1 to 4 carbon atoms; and

(C) from .25 to 2 parts by weight of a stabilizer.

A process for the production of an unsaturated polyester comprising reacting from 95 to 80 parts by weight of a carboxyl terminated polyester with 5 to 20 parts by weight of an epoxy-acrylate compound in an air atmosphere, at a temperature no greater than 170°C wherein said polyester has an acid number of from 20 to 85 and said epoxy-acrylate is of the formula

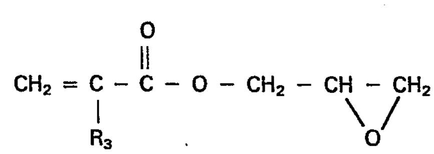

where $R_3$ is selected from the group consisting of hydrogen radical or an alkyl radical having 1 to 4 carbon atoms.

EP 0 089 913 A1

0088913

# UNSATURATED POLYESTER AND PROCESS FOR MAKING AN UNSATURATED POLYESTER

## Background of the Invention

In the UV curing of film, the exposed air coating interface is more inhibited and results in an under cured or wet surface (depending on the speed of cure, photo initiator, monomers and light intensity). For this reason a nitrogen blanket is usually placed over the photo-reactive surface before and during the UV treatment. Thus, there exists a great demand for a UV curable coating having a dry-tack free surface at room temperature in an air atmosphere.

One known ultraviolet curable composition comprises a solution of (a) from 5 to about 50 percent by weight of a polyester of terephthalic acid esters and a glycol of from about 60 mole percent to 100 mole percent of 1,2-propylene glycol and from 0 to 40 mole percent ethylene glycol; said polyester having an intrinsic viscosity of from about .05 to about .6; (b) from 95 to 50 percent by weight of ethylenically unsaturated photopolymerizable monomer; and (c) an effective amount of photo initiator in amounts of from .5 to 25 percent by weight of the total photocurable composition. The disadvantage of this composition is that the photopolymerizable monomers are cured whereas the polyester serves only as a binder due to the absence of a double bond existing between two carbon atoms in the polyester itself.

The present invention provides a composition and process for making said composition that is devoid of the disadvantage listed above.

## Summary of the Invention

Disclosed is a process for the production of an unsaturated polyester comprising reacting from 95 to 80 parts by weight of a carboxyl terminated copolyester with 5 to 20 parts by weight of an epoxy-acrylate compound at a temperature no greater than 170°C wherein

said copolyester has an acid number of from about 20 to about 85 and said epoxy-acrylate compound having the general structural formula:

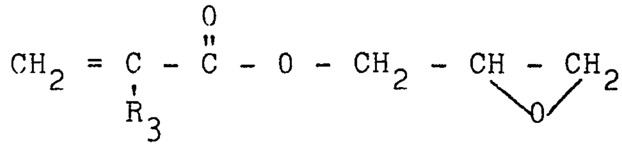

where $R_3$ is selected from the group consisting of a hydrogen radical or an alkyl radical having 1 to 4 carbon atoms.

Also disclosed is an unsaturated polyester comprising:

(A) from 95 to 80 parts by weight of a carboxyl terminated copolyester having an acid number from about 20 to about 85;

(B) from 4 to 15 parts by weight of an epoxy-acrylate compound of the formula

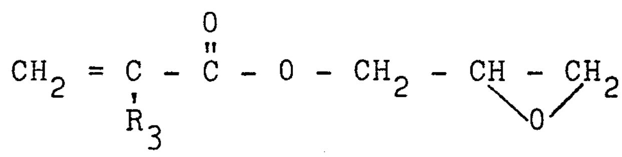

where $R_3$ is selected from the group consisting of a hydrogen radical or an alkyl radical having 1 to 4 carbon atoms;

(C) from .25 to 2 parts by weight of a stabilizer.

Detailed Description of the Invention

The production of a copolyester resin conventionally employs two stages: an esterification stage and a condensation stage. The preparation of the polyester prepolymer occurs in the esterification stage by the reaction of a diol and a dicarboxylic compound. Optionally, the introduction of a chain branching agent in the esterification stage such as that disclosed in U.S. application Serial No. 129,817 presently pending, may produce a polyester prepolymer having internal chain branching which has been found to lower the melt viscosity of the polyester at a given molecular weight to improve the leveling properties of the final powder coating. Leveling properties are defined to be that property yielding a smooth and substantially untextured finish

over a smooth surface substrate, such as polished metal.

Further, introduction of a multi-functional alcohol chain branching agent into the esterification stage creates a polymer having an increased hydroxyl number which, upon carboxyl end group capping, increases the required amount of the carboxyl capping agent. That agent, remaining unreactive in excessive concentrations, may be toxicologically undesirable.

The polyester prepolymer, whether subjected to internal chain branching or not, is polycondensed in the condensation stage to produce a copolyester resin having an intrinsic viscosity from about .10 to about .26 dl/g and preferably from .13 to .15 dl/g. Intrinsic viscosity is determined by a method utilizing a 60/40 (by weight) mixture of phenol/tetrachloroethane as a solvent and a reading of intrinsic viscosity at 30°C.

The dicarboxylic compound of the present invention may be either a dicarboxylic acid or dicarboxylic ester. The dicarboxylic acids may be an alkyl dicarboxylic acid having a total of from 2 to 16 carbon atoms, or an aryl dicarboxylic acid having a total of from 8 to 16 carbon atoms. Specific examples of alkyl dicarboxylic acids suitable for the present invention are oxalic acid, malonic acid, succinic acid, glutaric acid, adipic acid, pimelic acid, suberic acid, azelaic acid, sebacic acid, and the like. Various examples of an aryl acid include the various isomers of phthalic acid, such a paraphthalic (terephthalic) acid and naphthalic acid. Specific examples of alkyl substituted aryl acids include the various isomers of dimethylphthalic acid, such as dimethylisophthalic acid, dimethylorthophthalic acid, and dimethylterephthalic acid; the various acids of diethylphthalic acid, and diethylterephthalic acid; the various isomers of dimethylterephthalic acid, such as 2,6-dimethylnaphthalic acid and 2,5-dimethylnaphthalic; and the various isomers of diethylnaphthalic acid. Generally, dimethylterephthalic acid, isophthalic acid

and terephthalic acid are preferred dicarboxylic acids.

In lieu of the various dicarboxylic acids, the various diesters thereof may be utilized. Thus, the dicarboxylic compound may be an alkyl diester containing a total of from about 2 to 20 carbon atoms, as well as the alkyl substituted aryl diesters containing about from 10 to about 20 carbon atoms. Examples of specific alkyl diesters include dimethyl adipate, diethyl adipate, and the like. Specific examples of the various alkyl substituted aryl diesters include the various isomers of dimethyl phthalate, the various isomers of diethyl phthalate, the various isomers of dimethyl naphthalate and the various isomers of diethyl naphthalate. Of the dicarboxylic diesters, preferably the various isomers of dimethyl phthalate (dimethyl terephthalate) are used.

Of the dicarboxylic compounds, the various isomers of dimethyl terephthalate are most preferred.

These carboxylic acids, or the diester thereof, react in the esterification stage with a diol containing from about 2 to 10 carbon atoms. The glycol may be straight-chained or branched. Specific examples include ethylene glycol, propylene glycol, trimethylene glycol, 1,2-butane diol, 1,3-butane diol, 1,4-butane diol, 2,3-butane diol, neopentyl glycol, hexamethylene glycol, cyclohexane dimethynol, in the ester diol product of neopentyl glycol and hydropavalic acid (propanoic acid, 3-hydroxy-2, 2-dimethyl-3-hydroxy-2, 2-dimethylpropyl ester). Of the various diols, neopentyl glycol is most preferred. The diol is added to the esterification stage in the reactive charging step in a concentration in comparison to the dicarboxylic compound in a mole ratio from about 2.20 to about 1.15:1. Preferably the molar ratio is from about 1.7 to about 1.3:1.

In those circumstances where an internal chain branching agent is desirable, the chain branching agent of the present invention is a compound having at least a functionality of 3 to incorporate within the chain of

the polyester prepolymer and retain a branch reactive cite. Chain branching agents having at least a trifunctionality include trimellitic anhydride, pentaerythritol, glycerol, trimethylol propane, triethylol propane, and other multi-functional alcohols. The chain branching agent is reacted in the esterification stage in a concentration in comparison with the concentration of the dicarboxylic compound in a mole ratio less than about .10:1. Desirably, the chain branching agent has a concentration from about .5 to 10 mole percent, comparative to the concentration of the dicarboxylic compound, and preferably in a concentration of from 3 to 5 mole percent.

The esterification stage comprises a reaction charging step and a chain branching agent addition step. The chain branching agent addition step occurs simultaneously with the reactant charging step when the alcohol chain branching agent is a multi-functional alcohol such as trimethylol propane, triethylol propane, pentaerythritol, and glycerol. The reactant charging step preceeds the chain branching agent addition step when trimellitic anhydride is the chain branching agent. In such latter case, the chain branching addition step proceeds after at least 90 percent of the dicarboxylic compound and diol have completed methanolysis. Whereas, the esterification stage proceeds uninterrupted or undelayed when the chain branching agent is one of the multi-functional alcohols. An additional 20 minutes is required in the esterification stage before the condensation stage when the trimellitic anhydride is the chain branching agent.

Known catalysts can be used to prepare the carboxyl terminated polyester. Examples of catalysts are dibutyl tin oxide, manganese acetate, zinc acetate titanium butyl titanate and antimony trioxide.

Copolyester resins having carboxyl terminated end groups are prepared to be reacted with the epoxy-acrylate for use in this invention. These copolyester

resins preferably have internal chain branching to provide a low melt viscosity of the polyester at a given molecular weight to improve the leveling properties of the copolyester powder coating.

In those circumstances where the copolyester resin produced as described herein above, does not contain carboxyl terminated end groups, the termini of the copolyester polymer chain must be terminated with carboxyl groups for reaction with the epoxy-acrylate compound to make a UV curable copolyester resin as per the invention. The hydroxyl capping agents may be any anhydride of a carboxylic acid having at least two acid groups which upon reaction with the terminus of the polyester chain, retains a free carboxyl acid group as a reactive site for the epoxy-acrylate compound.

Specific examples of these anhydrides include anhydrides of the formula:

$$R_1 - \overset{O}{\overset{\|}{C}} - O - \overset{O}{\overset{\|}{C}} - R - COOH$$

wherein R is selected from the group consisting of an alkyl radical having from 1 to 18 carbon atoms, a halo-substituted alkyl radical having from 1 to 18 carbon atoms, a hydroxy - substituted akyl radical having from 1 to 18 carbon atoms, an aryl radical having from 6 to 24 carbon atoms; and wherein $R_1$ is an organic radical volatile at temperatures of the carboxyl capping reaction; anhydrides of the formula:

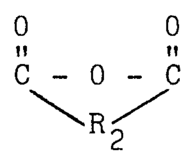

wherein $R_2$ is an organic radical having from 1 to 18 carbon atoms. Desirably, anhydrides of acids having at least two carboxylic acid end groups may be used as the hydroxyl capping agent. Specific examples of these anhydrides are phthalic anhydride, succinic anhydride, trimellitic anhydride, and the like. Of these anhydrides, trimellitic anhydride is preferred.

The hydroxyl capping agent may be added subsequent to the condensation of excess glycols but prior to the addition of the epoxy-acrylate. The hydroxyl capping agent may be added in a concentration of from about 1 mole percent to about 25 mole percent of carboxylate units contained in the final polymer. Desirably, the concentration is from about 10 mole percent to 14 mole percent of carboxylate units contained in the final polymer. Preferably, the concentration of the hydroxyl capping agents is about 12.5 mole percent per mole of carboxylate units.

When introducing the hydroxyl capping agent, temperatures within the reactor should range from about 150° to about 275°C. Desirably, the temperatures should range between 200° and 250°C and preferably the range of temperature is from about 210° to about 235°C. The pressure in the reactor is one atmosphere or ambiant pressures. The atmosphere for the reactor is in an inert atmosphere, preferably $N_2$.

The reaction of the polyester and the hydroxyl capping agent should continue until such time that the acid number of the copolyester should be from about 20 to about 85.

After the copolyester resin has significant carboxylic acid end groups, the temperature of the reactor is lowered to about 120°C to about 189°C, and preferably from about 150°C to about 170°C. The pressure is about 1 atmosphere or ambiant pressures. When a nitrogen atmosphere is present during the hydroxyl capping stage, the nitrogen atmosphere is subsequently purged and replaced by air. At this stage, a stabilizer may be added.

Although the copolyesters of this invention possess good resistance toward heat aging and photodegration, it is advisable to stabilize these compositions by incorporating stabilizers in the copolyester compositions. Examples of such known compounds are: 1,3,5-trimethyl-2,4, 6-tris(3,5-di-tert-butyl-4-hydroxy-benzyl)benzene,

tetrakis[methylene(3,5-di-tert-butyl-4-hydroxy-hydrocinnamate)]methane, N,N'-hexamethylene bis(3,5-di-tert-butyl-4-hydroxyhydrocinnamamide), N,N'-trimethylene bis(3,5-di-tert-butyl-4-hydroxyhydrocin-namamide), hydroquinone, p-benzoquinone, p-methoxyphenol, α-napthoquinone, anthroquinone, mono-tert-butyl hydroquinone, 2-5-diphenyl-p-benzoquinone, pyridine, phenothiazene, p-diaminobenzene, beta-naphthol, naphthylamine, pyrogallol, cupious chloride and nitrobenzene.

The amount of stabilizer required will vary upon the particular use of the UV resin; however, the amount should be such that the carbon-to-carbon double bond of the epoxy-acrylate is stabilized during the addition of the epoxy-acrylate compound to avoid the formation of free-radicals by the double bonds.

After the addition of the stabilizer, the temperature should be no greater than about 170°C. At this temperature, the epoxy-acrylate is added in a ratio of from at least 1/0.5 of the carboxyl group of the resin to the epoxy groups, preferably 1/1. At temperatures above 170°C, the epoxy-acrylate has a greater tendency to volatilize causing further problems in the incorporation of the epoxy-acrylate compound.

Epoxy-acrylates useful in the present invention have the general structural formula:

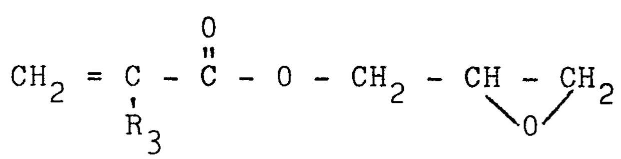

where $R_3$ is selected from the group consisting of a hydrogen radical or an alkyl radical having from 1 to 4 carbon atoms. Specific examples of these epoxy-acrylates are glycidyl methacrylate and glycidyl acrylate. Of these epoxy-acrylates glycidyl methacrylate is preferred.

The photosensitizers useful in the practice of this invention are known. Preferably a phosphine compound is used in the present invention. The following are

representative phosphines useful in this invention:

triphenylphosphine
tri-p-toluyl-phosphine
diphenylmethyl-phosphine
diphenyl-ethyl-phosphine
diphenylpropyl-phosphine
dimethyl-phenyl-phosphine
diethylphenyl-phosphine
dipropyl-phenyl-phosphine
divinylphenyl-phosphine
divinyl-p-methoxyphenyl-phosphine
divinyl-p-bromophenyl-phosphine
divinyl-p-toluyl-phosphine
diallyl-phenyl-phosphine
diallyl-p-methoxyphenyl-phosphine
diallyl-p-bromophenyl-phosphine
diallyl-p-toluyl-phosphine

The photosensitizer is preferably added after the polyester resin has been reacted with the epoxy-acrylate compound in amounts conventionally used for photosensitizers.

Preferably, photoinitiators are used in the present invention. When photoinitiators are used, they are present in amounts of from .5 to 25 percent by weight and preferably 1 to 15 percent of the total photocurable composition. Typical examples of photoinitiators which are applicable in the present invention are:

2,2, dimethoxy 2-phenylacetophenone
benzil
isopropyl benzoin ether
isobutyl benzoin ether
diethoxy acetophenone
4',4'-bi (chloromethyl) benxophenone
α-chloroacetophenone
4-tert-butyl,α,α,α-trichloroacetophenone
benzophenone/methyl diethanol amine
α,α di-sec-butoxyacetophenone
p-methoxybenzophenone

acetophenone
propiophenone
xanthrone
benzoin
benzaldehyde
napthoquinone
anthroquinone
benzophenone

In the application of the novel resins, as disclosed in the present invention, one would employ diluents as a means of controlling viscosity of said resin. Such diluents are preferably ethenically unsaturated photopolymerizable compounds.

The ethylenically unsaturated compounds useful in the present invention are lower alkyl and substituted alkyl esters of acrylic and methacrylic acid. Also useful are allyl acrylates and methacrylates. Examples of such compounds include:

methyl methacrylate
ethylmethacrylate
2-ethylhexyl methacrylate
isobutyl methacrylate
glycidyl methacrylate
glycidyl acrylate
butyl acrylate
2-hydroxyethyl acrylate
2-methoxyethyl acrylate
2-phenoxyethyl acrylate
2-hydroxypropyl acrylate
benzyl acrylate
tetrahydrofurfuryl acrylate
2-ethylhexyl acrylate
trimethylolpropane acrylate
1,6 hexanediol diacrylate
1,6 hexanediol dimethylacrylate
ethoxy ethoxy ethyl acrylate
pentaerythritol triacrylate

Also useful is:

N-vinyl-2-pyrrolidone

The amount of diluent used in conjunction with the resin of the present invention will vary according to the desired application and the preferred viscosity of the diluted resin composition. Preferably the diluent is in the range of 95 to 40 percent by weight of the overall composition.

In the application of the novel resins of the present invention one may employ levelers to aid in the uniform dispersion of the resin. Known levelers can be used in the present invention, such as silicone polycarbinols, silicone surfactants, cellulose acetate butyrate resins and trisnonyl phenyl phosphate, preferably silicone polycorbinols. The amount of leveler used in conjunction with the resin of the present invention will vary according to the desired application. Preferably the leveler is present in the range of .3 to 3 percent by weight of the overall composition.

The source of radiation for carrying out the method of the present invention can be any suitable source, such as actinic radiation produced from a mercury, xenon or carbon arc, a beam from a laser source, for example, a He-Cd laser, or the electron beam produced in or from a cathode ray gun. The only limitation placed on the radiation source used is that it must have an energy level at the irradiated composition sufficient to impart to the polymerizable system energy at an intensity high enough to reach the decomposition level of the photosensitive compound.

The following examples are supplied in order to illustrate, but not necessarily to limit, the scope of the present invention. All parts are based on parts by weight unless specifically stated otherwise. All intrinsic viscosity numbers were measured in a 60/40 phenol/tetrachloroethane mixed solvent at 30°C.

Example 1

In a reactor were charged 67.9 parts of dimethyl

terephthalate, 72.9 parts of neopentyl glycol and .09 parts of di-butyl tin oxide and this mixture was heated to 200°C in a nitrogen atmosphere. After four hours, 25 milliliters of methyl alcohol was distilled off. Thereafter, the reactor temperature was raised to 250°C. and a vacuum was initiated. After 45 minutes the vacuum was at 1 millimeter of mercury and the nitrogen flow was turned off. The vacuum state was retained for 1 hour whereupon the reaction product had a theoretical hydroxyl number of 29 and an intrinsic viscosity of .18. A nitrogen flow was initiated and the vacuum released. The temperature was then reduced to 240°F. While at atmospheric pressure, 6.5 parts of phthalic anhydride were added to the reactor. The anhydride polyester mixture was allowed to react for 30 minutes and a theoretical acid number was mathematically determined to be 26.9.

The carboxyl terminated resin was cooled to 175°C. and 1 part of p-methoxy phenol was added with continuous stirring. After 3 minutes, the nitrogen purge was extinguished and an air purge was initiated. The reactor temperature was lowered to 160°C. and 6.5 parts of glycidyl methacrylate were added and allowed to react for 30 minutes with continued stirring. The product was removed and cooled. The final acid number was determined to be 3.

Example II

In a reactor were charged 51.2 parts of adipic acid, 43.5 parts of ethylene glycol, and .1 part of titanium butyl titanate (in an ethylene glycol solution). A nitrogen purge was started and the reactor was heated to 170°C. The reactants were stirred for 1 hour during which 10 milliliters of water were distilled off. Thereafter a vacuum was initiated and the reactor temperature was raised to 190°C. The nitrogen purge was then shut off. After 45 minutes the vacuum was at 1 millimeter of mercury. 20 milliliters of ethylene glycol were distilled off. At this time an estimated hydroxyl

number was .29 and the intrinsic viscosity of the polymer was .18. Thereafter the vacuum was released and the temperature of the reactor was raised to 220°C during which a nitrogen purge was started. While at atmospheric pressure 3.2 parts of succinic anhydride were added. The anhydride polyester reaction was allowed to react for 20 minutes. After this time an acid number was theoretically determined to be 27.6.

The carboxyl terminated material was cooled to 160°C. and 1 part of p-methoxy phenol was added with continuous stirring. After 3 minutes the nitrogen purge was extinguished and an air purge was initiated. 4.8 parts of glycidyl methacrylate were added and allowed to react for 14 minutes with continued stirring. The product was removed and cooled. The final acid number was determined to be 2.5

Example III

In a reactor were charged 51.2 parts of adipic acid, 43.5 parts of ethylene glycol and .1 part of titanium butyl titanate (in an ethylene glycol solution). The reactants were heated to 170°C in a nitrogen atmosphere. After 1 hour, 12.6 milliliters of water were distilled off whereupon the vacuum was initiated. The temperature of the reactor was raised to 220°C. with the nitrogen being eliminated after 40 minutes. 5 minutes later the vacuum was at 1 millimeter of mercury. 20.4 milliliters of ethylene glycol were distilled off. It was estimated that the polymer had a hydroxyl number of 29 and an intrinsic viscosity of .18. The vacuum was released and a nitrogen purge was turned on. At atmospheric pressure the temperature of the reactor was raised to 220°C. 4.7 parts of phthalic anhydride were added to the reactor. The anhydride polyester mixture was allowed to react for 20 minutes. The theoretical acid number was determined to be 26.9.

The carboxyl terminated material was cooled to 160°C. The nitrogen purge was extinguished and an air purge was initiated. After 3 minutes of continuous stirring, 1 part

of p-methoxy phenol was added followed by the addition of 4.7 parts of glycidyl methacrylate. The materials were allowed to react for 17 minutes with continuous stirring. The product was removed and cooled. The final acid number was determined to be 19.8.

Example IV

In a reactor were charged 51.2 parts of adipic acid, 43.3 parts ethylene glycol, .5 parts trimethylolpropane and .1 part of titanium butyl titanate (in an ethylene glycol solution). A nitrogen purge was initiated and the temperature of the reactor was raised to 170°C. Mechanical stirring was initiated. After 1 hour, 10 milliliters of $H_2O$ were distilled off. A vacuum was initiated and the reactor temperature was raised to 190°C. The nitrogen purge was turned off after 40 minutes and the vacuum exhausted the residual nitrogen gas. The vacuum pressure was at 1 millimeter of mercury. Vacuum conditions were maintained for 2 hours. 18 milliliters of ethylene glycol were distilled off. It was estimated that the polyester had a hydroxy number of 33 and the intrinsic viscosity was .18. The vacuum was released and the nitrogen gas purge was resumed. At atmospheric pressure the temperature was raised to 220°C. and 3.6 parts of succinic anhydride were added. The anhydride-polyester mixture was allowed to react for 20 minutes. The theoretical acid number was determined to be 31.2.

The carboxyl terminated material was cooled to 160°C. The nitrogen purge was extinguished and an air purge was initiated. After 3 minutes of continuous stirring, .7 parts of p-methoxy phenol was added followed by the addition of 5.2 parts of glycidyl methacrylate. The materials were allowed to react for 15 minutes with continuous stirring. The product was removed from the reactor and cooled. The final acid number was determined to be 13.

Example V

In a reactor were charged 49.7 parts ethylene glycol,

23.3 parts dimethyl terephthalate and .1 part of titanium butyl titanate catalyst (in an ethylene glycol solution). A nitrogen purge was initiated and the temperature of the reactor was raised to 170°C. Mechanical stirring were initiated. After 1 hour, 7 milliliters of methyl alcohol was distilled off. 37.6 parts of azelaic acid and 13.3 parts of isophthalic acid were added to the reactor. The reactor temperature was raised to 200°C. After 1 hour, 8.5 milliliters of water were distilled off. Vacuum was initiated and the temperature of the reactor was increased to 250°C. After 40 minutes the nitrogen purge was eliminated. 5 minutes later the vacuum pressure was 1 millimeter. Vacuum conditions were continued for 2 hours during which 21.5 milliliters of ethylene glycol was distilled off. A theoretical hydroxyl number was determined to be 56 and the intrinsic viscosity for the resin was .14. The vacuum was released and nitrogen purge was initiated. The reactor temperature was lowered to 225°C and the air pressure was increased to atmospheric. 12.5 parts of phthalic anhydride were added to the polyester. The anhydride-polyester was allowed to react for 20 minutes. The theoretical acid number was 48.9.

The carboxyl terminated material was cooled to 175°C. and 1 part of p-methoxy phenol was added. The nitrogen purge was extinguished and an air purge was initiated. The reactor temperature was lowered to 150°C and 11.4 parts of glycidyl methacrylate was added. The materials were allowed to react for 20 minutes with continuous stirring. The product was removed and cooled. The final acid number was determined to be 5.5.

Example VI

In a reactor were charged 49.7 parts of ethylene glycol, 23.3 parts of dimethyl terephthalate and .1 parts of titanium butyl titanate (in an ethylene glycol solution). A nitrogen purge was initiated and the temperature of the reactor was raised to 170°C. Mechanical stirring was initiated. After 1 hour, 7 milliliters of methyl alcohol were distilled off. 37.6

parts of azelaic acid and 13.3 parts of isophthalic acid were added to the reactor. The reactor temperature was raised to 200°C. After 1 hour, 10 milliliters of water were distilled off. A vacuum was initiated and the reactor temperature was raised to 250°C. The nitrogen purge was turned off. After 40 minutes the vacuum had exhausted the residual nitrogen gas. The vacuum pressure was at 1 millimeter. Vacuum conditions were held for 2 hours, during which 21.5 milliliters of ethylene glycol were distilled off.

It was estimated that the polyester had a hydroxyl number of 56 and an intrinsic viscosity of .14. The vacuum was released and the nitrogen purge was resumed. At atmospheric pressure the temperature was lowered to 220°C. 6.3 parts of phthalic anhydride and 8.1 parts of trimellitic anhydride were added to the reactor. The anhydride-polyester was allowed to react for 20 minutes and a theoretical acid number was mathematically determined to be 77.3.

The carboxyl terminated material was cooled to 175°C and 1 part of p-methoxy phenol was added. The nitrogen purge was extinguished and an air purge was initiated. The reactor temperature was lowered to 150°C and 18.8 parts of glycidyl methacrylate were added. The materials were allowed to react for 20 minutes with continuous stirring. The product was removed and cooled. The final acid number was determined to be 6.5.

Example VII

In a reactor were charged 5257.2 parts of dimethyl terephthalate, 4222.2 parts of ethylene glycol, 3859 parts of neopentyl glycol and 4.9 parts zinc acetate. A nitrogen purge was initiated and the reactor temperature was raised to 180°C. Mechanical stirring was initiated. After 3 hours, 2160 milliliters of methyl alcohol were distilled off. The reactor temperature was raised to 208°C and 4585.4 parts of isophthalic acid were added to the reactor. After 1 hour 860 milliters were distilled off. 260 parts of antimony

trioxide in an ethylene glycol solution (containing 1% Sb by weight) were added and nitrogen purge was resumed. At atmospheric pressure, and the reactor at a temperature of 220°C, 776.9 parts of phthalic anhydride and 998.8 parts of trimellitic anhydride were added to the reactor. The materials were allowed to react for 20 minutes and the acid number was determined to be 66.

1000 parts of the above resin were added to a 2 liter resin reactor. A nitrogen purge was initiated and the reactor was heated with stirring to 236°C. The temperature was then lowered to 170°C and the nitrogen purge was replaced by an air purge. 5 parts of p-methoxy phenol were added. The reactor temperature was lowered to 160°C and 159 parts of glycidyl methacrylate were added. The material was allowed to react for 10 minutes. The product was then removed from the reactor and cooled. The final acid number was determined to be 2.5.

## Example VIII

In a reactor were charged 24.3 parts of ethylene glycol, 20.8 parts of neopentyl glycol, 38.8 parts of dimethyl terephthalate, 1.1 parts of trimethyl propane and .1 part manganese acetate. A nitrogen purge was initiated and the reactor temperature was raised to 170°C. Mechanical stirring was initiated. After 1 hour 12.8 milliliters of methyl alcohol was distilled off. 33.2 parts of isophthalic acid was then added to the reactor. The reactor temperature were raised to 200°C. After 1 hour, 7.2 milliliters of water were distilled off. Next, .1 part of titanium butyl titanate ethylene glycol solution was added and vacuum was initiated with the nitrogen purge being slowly extinguished after 40 minutes. Under vacuum conditions for 2 hours, 9 milliliters of ethylene glycol was distilled off. It was estimated the hydroxyl number was 51 and the intrinsic viscosity was .15. The vacuum was released with resumption of the nitrogen

purge. The temperature of the reactor was lowered to 220°C whereupon 2.9 parts of trimellitic anhydride were added. The materials were allowed to react for 20 minutes. The acid number was determined to be 17.

The carboxyl terminated material was cooled to 175°C. The nitrogen purge was extinguished and an air purge was initiated. .4 parts of p-methoxy phenol was added. After 30 minutes with continuous stirring, the temperature was lowered to 170°C, and 3.6 parts of glycidyl methacrylate were added. The materials were allowed to react for 10 minutes. The product was then removed from the reactor. The final acid number was determined to be 4.1.

Example IX

1589 parts of a carboxyl terminated resin (Neopentyl glycol-trimetholpropane/terephthalate/trimellic anhydride in a weight ratio of (100 - 3/85/12) was charged in a reactor. The resin had an acid number of 55. A nitrogen purge was initiated and the reactor was heated, with stirring, to 185°C. After the resin was melted, the reactor temperature was lowered to 170°C. The nitrogen purge was extinguished and an air purge was initiated. 16 parts of p-methoxy phenol were added with continuous stirring. Ten minutes later the reactor temperature was lowered to 150°C and 211 parts of glycidyl methacrylate were added. The materials were allowed to react for 10 minutes, after which the product was removed and cooled. The final acid number was determined to be 2.

Example X

54 parts of the resin produced in Example VII, 23 parts of N-vinyl pyrrolidone, 23 parts of ethoxy ethoxy ethyl acrylate, 2 parts of 2,2-dimethoxy 2-phenylacetophenone, 1 part triphenylphosphine .5 parts of SD 5097 leveler (silicone polycarbinol) and 2 parts benzophenone were slowly added to a reactor with constant stirring. The reactor temperature was raised to 120°F and the reactants were allowed to mix for 2 hours.

The UV curable resin was allowed to cool to room temperature. A small amount of the resin was poured into a sheet of Mylar (polyester film). Another layer of the same film was placed above the UV curable resin. A rolling pin was used to press out the mixture into a thin film. The entire laminate was placed under low intensity ultra violet lights (2400 microwatts/$cm^2$) for a period of 15 minutes.

The cured polyester film was peeled from the two sheets of Mylar. The ultra violet cured film had a gauge of .011 inches and a tensile strength of 3420 pounds per square inch. The elongation was 125 and at 100% modulus the resin had a value of 2720 pounds per square inch. The tensile strength, elongation and 100% modulus was evaluated on an Instron Tester Model TMF-86.

Example XI

2 parts of the resin produced in Example IX was placed in a 20 milliliter beaker followed by 2 parts of vinyl pyrrolidone. This mixture was stirred and was heated to 80°C. After 2 minutes, .04 parts of 2,2 dimethoxy 2 phenylacetophenone was added to the mixture followed by the addition of .02 parts of triphenylphosphine. The mixture was then cooled to room temperature.

The mixture was a pourable light yellowish fluid. The mixture was poured onto a Melinex film substrate and placed under a set of low intensity (2400 microwatts/$cm^2$) ultraviolet lights. After 15 minutes of irradiation in an air atmosphere, the coated Melinex was removed from the light source. The resin's surface exposed to air was tack free.

While certain representative embodiments and details have been shown for the purpose of illustrating the invention, it will be apparent to those skilled in the art that various changes and modifications may be made therein without departing from the scope of the invention.

## CLAIMS

1. A process for the production of an unsaturated polyester comprising reacting from 95 to 80 parts by weight of a carboxyl terminated polyester with 5 to 20 parts by weight of an epoxy-acrylate compound in an air atmosphere, at a temperature no greater than 170°C wherein said polyester has an acid number of from 20 to 85 and said epoxy-acrylate is of the formula

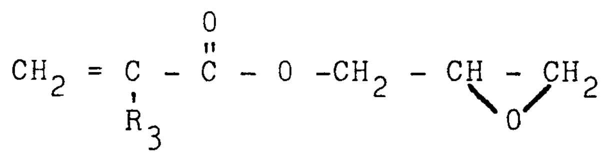

where $R_3$ is selected from the group consisting of hydrogen radical or an alkyl radical having 1 to 4 carbon atoms.

2. A process for the production of an unsaturated polyester comprising reacting from 95 to 80 parts by weight of a carboxyl terminated polyester with 5 to 20 parts by weight of glycidyl methacrylate, in the presence of air and at a temperature no greater than 170°C.

3. An unsaturated polyester comprising:
   (A) from 95 to 80 parts by weight of a carboxyl terminated copolyester having an acid number of from 20 to 85;
   (B) from 4 to 15 parts by weight of an epoxy-acrylate compound of the formula

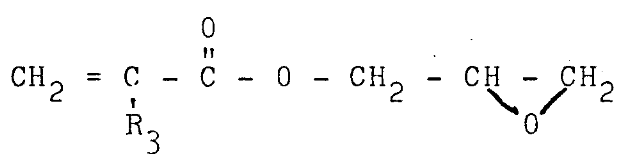

   where $R_3$ is selected from the group consisting of a hydrogen radical or an alkyl radical having 1 to 4 carbon atoms; and
   (C) from .25 to 2 parts by weight of a stabilizer.

4. A photopolymerizable compound comprising:
   (A) from 95 to 80 parts by weight of a carboxyl terminated copolyester having an acid number from 20 to 85;
   (B) from 4 to 15 parts by weight of an epoxy-acrylate compound of the formula

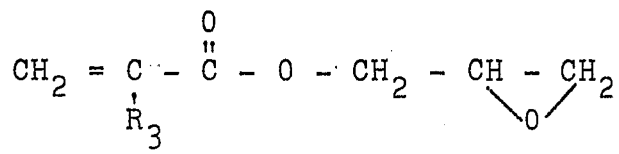

   where $R_3$ is selected from the group consisting of a hydrogen radical or an alkyl radical having 1 to 4 carbon atoms;
   (C) from .5 to 5 parts by weight of a photo initiator;
   (D) from .2 to 3 parts by weight of a photosensitizer;
   (E) from .25 to 2 parts by weight of a stabilizer.
   (F) from .3 to 3 parts by weight of a leveler.

5. A photopolymerizable compound comprising:
   (A) from 95 to 80 parts by weight of a carboxyl terminated copolyester having an acid number from 20 to 85;
   (B) from 4 to 15 parts by weight of an epoxy-acrylate compound of the formula

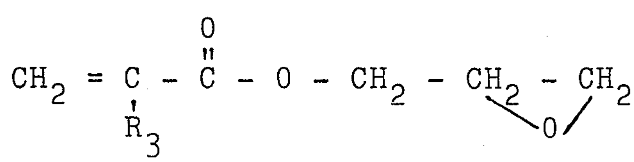

   where $R_3$ is selected from the group consisting of a hydrogen radical or an alkyl radical having 1 to 4 carbon atoms;
   (C) from .5 to 5 parts by weight of a photo initiator;
   (D) from .2 to 3 parts by weight of a photosensitizer;
   (E) from .25 to 2 parts by weight of a stabilizer;
   (F) from 2000 to 80 parts by weight of an ethenically unsaturated compound.

6. A photopolymerizable compound of claim 4 or 5 wherein said epoxy-acrylate is glycidyl methacrylate.

7. A photopolymerizable compound of claim 5 wherein said carboxyl terminated copolyester has an acid number from 24 to 30.

8. A photopolymerizable compound of claim 5 wherein said carboxyl terminated copolyester has an acid number from 52 to 70.

9. A photopolymerizable compound comprising
   (A) from 95 to 80 parts by weight of a carboxyl terminated copolyester having an acid number from 20 to 85;
   (B) from 4 to 15 parts by weight of glycidyl methacrylate;
   (C) from .5 to 5 parts by weight of photoinitiator wherein said photoinitiator is selected from 2.2 dimethoxy 2-phenylacetophenone or benzophenone or mixtures thereof;
   (D) from .2 to 3 parts by weight of triphenyl phosphine;
   (E) from .25 to 2 parts by weight p-methoxy phenol;
   (F) from 2000 to 80 parts by weight of N-vinyl pyrrolidone or ethoxy ethoxy ethyl acrylate or mixtures thereof.

10. An unsaturated polyester of claim 3 wherein said stabilizer is p-methoxy phenol.

European Patent Office

0089913

Application number

# EUROPEAN SEARCH REPORT

EP 83 63 0046

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US-A-3 485 732 (G.F. D'ALELIO)<br>--- | | C 08 G 63/46<br>C 09 D 3/68 |
| A | CHEMICAL ABSTRACTS, vol. 82, no. 10, 10th March 1975, page 60, no. 58877a, Columbus, Ohio, USA & JP - A - 74 14543 (OKURA INDUSTRIAL CO., LTD.) 08-04-1974<br>--- | | |
| A | CHEMICAL ABSTRACTS, vol. 89, no. 14, 2nd October 1978, page 188, no. 112692w, Columbus, Ohio, USA & JP - A - 78 60981 (NIPPON PAINT CO., LTD.) 31-05-1978<br>----- | | |
| | | | TECHNICAL FIELDS SEARCHED (Int. Cl. 3) |
| | | | C 08 G 63/00 |

The present search report has been drawn up for all claims

| Place of search | Date of completion of the search | Examiner |
|---|---|---|
| THE HAGUE | 24-06-1983 | STIENON P.M.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82